# EUROPEAN PATENT APPLICATION

(11) **EP 4 290 851 A1**
(43) Date of publication of application: **13.12.2023**
(21) Application number: 22178170.1
(22) Date of filing: 09.06.2022
(51) Int. Cl.: H04N 5/225, H04K 1/02

(54) **CIRCUIT BOARD FOR A CAMERA MODULE OF A MOTOR VEHICLE**

(71) Applicant: Veoneer Sweden AB, 447 37 Vårgårda (SE)
(72) Inventor: Lind, Tobias, 58330 Linköping (SE); Fredriksson, Peter, 58422 Linköping (SE)
(74) Representative: Müller Verweyen

(57) **Abstract**

The invention relates to a circuit board (10) for a camera module (20) of a motor vehicle, comprising an image sensor attachment area (11) and a lens holder attachment area (12). The circuit board (10) has either multiple vias (13) in the image sensor attachment area (11), or the circuit board (10) has multiple vias (13) in the lens holder attachment area (12). The invention further relates to a camera module (20).

## Description

The invention relates to a circuit board for a camera module of a motor vehicle, comprising an image sensor attachment area and a lens holder attachment area. The invention further relates to a corresponding camera module.

Automotive cameras are exposed to temperatures varying over a wide range, and are required to have excellent imaging performance over the whole temperature range. Especially in fixed-focus automotive camera modules, a major challenge is to retain the focus over the temperature envelope. However, in a typical configuration of a camera module a lens holder is connected to a back plate or circuit board. The lens holder holds a lens objective whose image plane is on an image sensor, with the back plate or circuit board holding the image sensor. The parts of the camera module are subject to thermal expansion over the temperature range. For example, the lens holder may expand with increased temperature and therefore increase the distance between the lens objective and the image sensor. The lens objective may also shift the image plane over the temperature range, for example. As multiple parts of a camera module can be influenced in different ways over the wide temperature range, it is challenging to design a camera module in a way that temperature drifts of the focus on the image sensor are avoided or balanced out, respectively.

Accordingly, it is the object of the invention to provide means for improving the thermal compensation of focus drifts in a camera module.

The invention solves this object with the features of the independent claims. A circuit board for a camera module of a motor vehicle is proposed, comprising an image sensor attachment area and a lens holder attachment area. It is proposed that either the circuit board has multiple vias in the image sensor attachment area, or the circuit board has multiple vias in the lens holder attachment area.

In other words, multiple vias of the circuit board are arranged underneath the image sensor respectively in the area dedicated for the image sensor, or alternatively multiple vias of the circuit board are arranged underneath the lens holder respectively in the area dedicated for the lens holder. Therein, a few vias in one of the above areas, which is not the area comprising multiple vias, are not contradictory to the proposed solution.

Preferably, either the ratio of the area covered by vias in the image sensor attachment area to the image sensor attachment area is greater than 0.05, or the ratio of the area covered by vias in the lens holder attachment area to the lens holder attachment area is greater than 0.05.

The proposed circuit board enables an adjustment of the thermal expansion of the area where the image sensor is attached or attachable relative to the area where the lens holder is attached or attachable to the circuit board. A way to affect how the circuit board contributes to the positioning of an image sensor with respect to a lens holder over a temperature range is provided. As a result, the design process and the layout of a camera module for an automotive camera has less constraints and can be more refined since the thermal characteristics can be tailored or finetuned by the proposed circuit board.

In accordance with the above, the ratio A_vs/A_s is either greater than 0.05, wherein A_vs is the area covered by vias in image sensor attachment area, and wherein A_s is the image sensor attachment area, or the ratio A_vh/A_h is greater than 0.05, wherein A_vh is the area covered by vias in the lens holder attachment area, and wherein the lens holder attachment area is A_h.

The circuit board is preferably made of a fiberglass plastic composite. Generally, such composites have a thermal expansion coefficient (CTE) that is relatively high, for example 30 to 40 ppm/°C or even higher. The vias in the circuit board are holes in the circuit board which can be easily manufactured at low cost.

In a preferred embodiment, the vias are plated with a conductive material. The conductive material is pure copper, for example, which has a coefficient of thermal expansion (CTE) of 16.5 ppm/°C. Other conductive materials, for example a copper-based alloy, may also be suitable as long as there is a difference in the thermal expansion between the material of the vias plating and the base material of the circuit board.

In the vias the base material of the circuit board is removed, e.g., by drilling, and a metallic plating is put in the vias. Normally, the plating in a via has the function to electrically contact the upper surface to the lower surface of the circuit board, for example. In this case, the vias are arranged in a certain density in the lens holder attachment area or in the image sensor attachment area. Thereby, the multiple vias locally change the thermal expansion behavior of the circuit board so that a difference of the thermal expansion behavior of the image sensor attachment area relative to the lens holder attachment area can be achieved. In other words, the large number of vias, either beneath the image sensor or beneath the lens holder changes the way the circuit board changes over the temperature range.

The placement of the vias either in the image sensor attachment area or in the lens holder attachment area determines in which direction a change with respect to thermal expansion is made, wherein the ratio of the area covered by vias in a certain area controls the magnitude of the change. Nonetheless, a certain minimum ratio, like a ratio of 0.05 for example, is necessary to achieve a sufficient effect. For example, a single via does not provide a sufficient effect. The via area includes the hole and any plating of the via hole wall.

In case the vias are arranged in the image sensor attachment area, the image sensor attachment area with said ratio of vias will not expand with increasing temperature to the same extent as the lens holder attachment area. This way a distance between an image sensor on the image sensor attachment area and a lens barrel or lens objective held by a lens holder on the lens holder attachment area can be increased with increased temperature while neglecting the expansion and thermal drifts of the other components. In case the vias are arranged in the lens holder attachment area the above distance can be decreased with increasing temperature while neglecting the thermal expansion or thermal drifts of other components. The proposed circuit board can be designed to compensate for any temperature induced changes of other components in order to ensure a good focus on the image sensor over a wide temperature range.

In a preferred embodiment, the ratio of the area covered by vias in the image sensor attachment area to the image sensor attachment area is either greater than 0.1, for example 0.15, or the ratio of the area covered by vias in the lens holder attachment area to the lens holder attachment area is greater than 0.1, for example 0.15.

In accordance with the above, the ratio A_vs/A_s is either preferably greater than 0.1, or the ratio A_vh/A_h is preferably greater than 0.1.

The above ratio greater than 0.1 allows a highly effective change of the thermal expansion characteristics of the respective area on the circuit board.

Preferably, an image sensor is connected to the image sensor attachment area of the circuit board. Thus, the image sensor and in particular the optical plane of the image sensor can be affected by the thermal behavior of said circuit board.

In a preferred embodiment, the image sensor attachment area has the same size as the image sensor.

Preferably, a lens holder is connected to the lens holder attachment area.

In a preferred embodiment, the lens holder attachment area has the same size as the lens holder connected to the circuit board. Preferably, the lens holder attachment area matches the surface of the lens holder in contact with the circuit board.

The image sensor attachment area is preferably separate from the lens holder attachment area. Thereby, a distance is created between these areas so that the different thermal expansion characteristics in these areas can be utilized in its entirety.

In an advantageous embodiment, the majority of the vias is unfilled, or filled with a material which does not counteract the effect of the reduced thermal expansion. The vias comprise preferably through holes, where the base material of the circuit board is removed. Unfilled vias do not counteract the effect of reduced thermal expansion in the area with multiple vias in comparison to filled vias, since a filler is generally made out of plastic and increases the thermal expansion. In a possible embodiment, tented vias can used to close the through holes of the vias in order to avoid ingress of particles, for example, while limiting the counteracting effect with regard to thermal expansion.

It is further proposed that the vias have a diameter between 0.1 mm and 0.7 mm. This allows a reasonable change of the thermal expansion characteristics, in particular with the plating of the vias, while maintaining enough structural stability of the area with a high via ratio.

In an advantageous embodiment, the ratio of the area covered by vias in the image sensor attachment area to the image sensor attachment area is smaller than 0.4, and/or wherein the ratio of the area covered by vias in the lens holder attachment area to the lens holder attachment area is smaller than 0.4. Said ratio allows to maintain a sufficient mechanical stability of the circuit board.

In accordance with the above, the ratio A_vs/A_s is preferably smaller than 0.4, wherein A_vs is the area covered by vias in image sensor attachment area, and wherein A_s is the image sensor attachment area, and/or the ratio A_vh/A_h is preferably smaller than 0.4, wherein A_vh is the area covered by vias in the lens holder attachment area, and wherein the lens holder attachment area is A_h.

In a further development, it is proposed that the image sensor attachment area is surrounded by an edge strip having the same ratio or similar ratio of area covered by vias in the edge strip to the edge strip as the ratio in the image sensor attachment area, and/or wherein the lens holder attachment area is surrounded by an edge strip having the same ratio or similar of area covered by vias in the edge strip to the edge strip as the ratio in the lens holder attachment area.

Accordingly, the area having a high via ratio is larger than the image sensor attachment area respectively larger than the lens holder attachment area. The edge strip facilitates the different thermal expansion on the circuit board for the image sensor attachment area and the lens holder attachment area. It can be ensured that the edges of the image sensor attachment area or the lens holder attachment area also have the same or similar changed thermal expansion characteristics as the middle of said areas.

To solve the object of the invention, a camera module for a motor vehicle is proposed, comprising a lens objective, a lens holder holding said lens objective, and a circuit board according to any one of claims 1 to 13 connected to said lens holder in the lens holder attachment area and holding an image sensor in the image sensor attachment area.

The proposed camera module provides an advantageous thermal compensation of focus drift, which enables the alignment of the image plane of the lens objective and the sensor plane over a wide temperature range.

Preferably, the camera module is a fixed focus camera module. Fixed focus camera modules are in particular sensitive to focus drifts as there are no active adjustment means due to the fixed focus. Especially, fixed focus camera modules benefit from the proposed circuit board.

In the following the invention shall be illustrated on the basis of preferred embodiments with reference to the accompanying drawings, therein shows:
- Fig. 1: a circuit board with multiple vias in the sensor attachment area;
- Fig. 2: a camera module with a circuit board with multiple vias beneath the image sensor;
- Fig. 3: a camera module with a circuit board with multiple vias beneath the image sensor at increased temperature;
- Fig. 4: a circuit board with multiple vias in the sensor attachment area;
- Fig. 5: a camera module with a circuit board with multiple vias beneath the lens holder; and
- Fig. 6: a camera module with a circuit board with multiple vias beneath the lens holder at increased temperature.

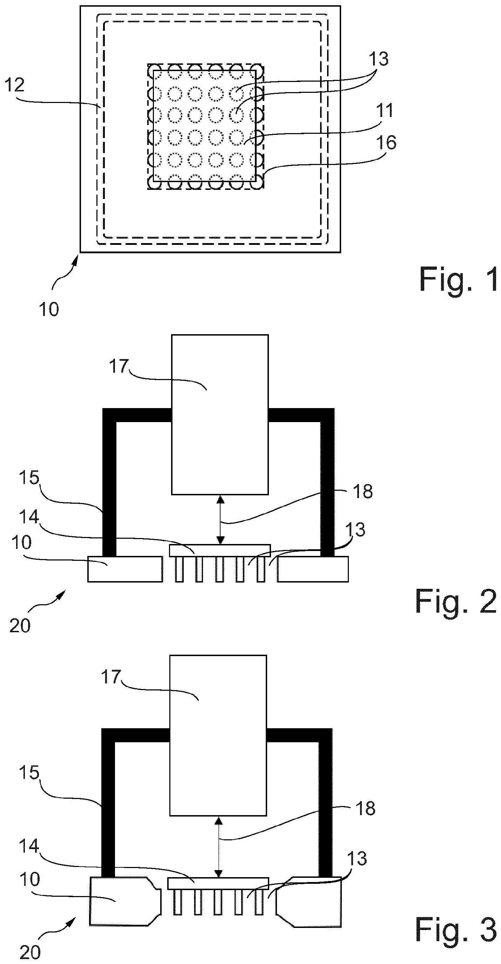

Figure 1 shows an illustration of an embodiment of a circuit board 10 for a camera module 20. The circuit board 10 is for example a printed circuit board (PCB) on which electronic components for controlling the camera module 20 are arranged. The circuit board 10 comprises an area which is dedicated for an image sensor 14. The dedicated area is the image sensor attachment area 11, where an image sensor 14 can be placed and electrically connected to the circuit board 10. There is also an area which is dedicated for the attachment of a lens holder 15, which lens holder attachment area 12 has a rectangular shape in this embodiment. A lens holder 15 can be mounted to the circuit board 10 by any fixation means like screws, clips, and/or adhesive for example. The image sensor attachment area 11 is surrounded by the lens holder attachment area 12.

The image sensor attachment area 10 comprises multiple vias 13 in the circuit board 10, which vias 13 are connections between different layers of the circuit board 10. In this preferred embodiment, the vias 13 are copper plated through holes, which are adapted to connect the top and the bottom layer of the circuit board 10. The vias 13 in the image sensor attachment area 11 may have an electrical function, but the main function is to reduce the thermal expansion in the image sensor attachment area 11 compared to the lens holder attachment area 12. Therefore, the vias 13 are positioned in the image sensor attachment area 11 and in a surrounding edge strip 16, which is not covered by an image sensor 14. Herein, the vias 13 are positioned with a high density. In preferred embodiments, the area covered by the vias 13 preferably makes up more than 5%, further preferably more than 10%, for example 15%, of the image sensor attachment area 11 and of the edge strip 16. The area covered by the vias 13 preferably makes up less than 40% of the image sensor attachment area 11 and the surrounding edge strip 16. The high density of vias 13 reduces the thermal expansion ratio in this area of the circuit board 10. As a result, the image sensor attachment area 11 and the lens holder attachment area 12 of the circuit board 10 have a different thermal expansion behavior in particular regarding the thickness of the circuit board 10 over a wide temperature range. Said effect is further described with respect to the following figures.

Figures 2 and 3 schematically show two cross sections of a camera module 20 with a circuit board 10 according to Figure 1 at different temperatures, wherein the temperature in Figure 3 is higher than in Figure 2. The camera module 20 further comprises an image sensor 14 attached to the image sensor attachment area 11, a lens holder 15 attached to the lens holder attachment area 15 and a lens objective 17. The lens objective 17 focuses the captured image on the image sensor 14. The lens objective 17 and the image sensor 14 have a distance 18 which is crucial for the focus and image sharpness of the camera module 20. Beneath and besides the image sensor 14 are vias 13 in the circuit board 10 as shown in the cross section.

Figure 3 shows the same camera module 20 as Figure 2 at an increased temperature. The increased temperature compared to

Figure 2 leads to various changes in all the components of the camera module 20. For example, the focus length of the lens objective 17 may increase with increasing temperature which leads to a focus drift of the camera module 20. The circuit board 10 allows for a precise compensation of the focus drift in the components of the camera module 20 as illustrated. The thickness of the circuit board 10 in the area beneath the lens holder 15 increases with increasing temperature with the coefficient of thermal expansion of the material of the circuit board 10 while the thickness in the area beneath and around the image sensor 15 increases with increasing temperature with a reduced coefficient of thermal expansion due to the high density of vias 13. This leads to an increase in the distance 18 between the lens objective 17 and the image sensor 14. Therefore, the thermal induced focus drift of the rest of the camera module 20 can be precisely compensated by the circuit board 10.

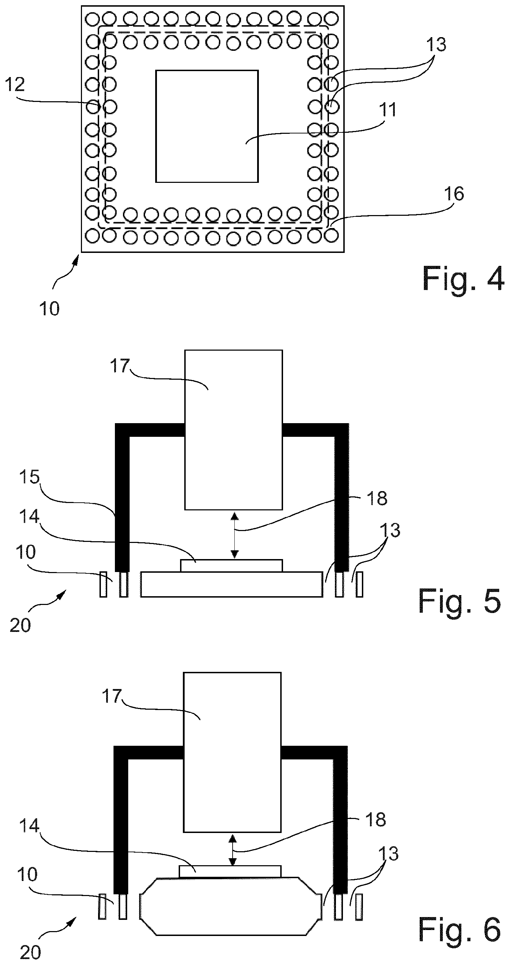

Figure 4 shows an illustration of another embodiment of a circuit board 10, wherein a high density of vias 13 is arranged in the lens holder attachment area 12 and the surrounding edge strip 16. The image sensor attachment area 11 may comprise few vias 13, e.g. for electrical functions, but lacks a high density of vias 13. Accordingly, the thermal expansion behavior of the circuit board 10 of the embodiment of Figures 4 to 6 is different to the embodiment of Figures 1 to 3.

Figure 5 and 6 show cross sections of a camera module 20 with the circuit board 10 of Figure 4. Similar to the embodiment of the Figures 2 and 3 the lens objective 17 is arranged at a distance 18 in order to focus the image on the plane of the image sensor 14. Figure 6 shows the camera module 20 of Figure 5 at an increased temperature, wherein the thermal behavior of the circuit board 10 is illustrated. The thickness of the circuit board 10 expanses with increasing temperature in accordance with the coefficient of thermal expansion of the material of the circuit board 10, for example fiber reinforced plastic.

Thus, the thickness of the circuit board 10 beneath the image sensor 14 increases. The thickness in the area beneath and around the lens holder 15, the lens holder attachment area 12 and the edge strip 16, increases with a reduced coefficient of thermal expansion due to the high density of vias 13. Which reduces the distance 18 between the lens objective 17 and the image sensor 14 with increased temperature, while neglected the thermal drift of the other components of the camera module 20 in this illustration. Therefore, the thermal induced focus drift of the rest of the camera module 20 can be precisely compensated by the circuit board 10.

## Claims

1. Circuit board (10) for a camera module (20) of a motor vehicle, comprising an image sensor attachment area (11) and a lens holder attachment area (12), **characterized in that** either
- the circuit board (10) has multiple vias (13) in the image sensor attachment area (11),
or
- the circuit board (10) has multiple vias (13) in the lens holder attachment area (12).

2. Circuit board (10) according to claim 1, wherein either
- the circuit board (10) has multiple vias (13) in the image sensor attachment area (11), wherein the ratio of the area covered by vias (13) in the image sensor attachment area (11) to the image sensor attachment area (11) is greater than 0.05, or wherein
- the circuit board (10) has multiple vias (13) in the lens holder attachment area (12), wherein the ratio of the area covered by vias (13) in the lens holder attachment area (12) to the lens holder attachment area (12) is greater than 0.05.

3. Circuit board (10) according to any one of the preceding claims, wherein either
- the ratio of the area covered by vias (13) in the image sensor attachment area (11) to the image sensor attachment area (11) is greater than 0.1, or
- the ratio of the area covered by vias (13) in the lens holder attachment area (12) to the lens holder attachment area (12) is greater than 0.1.

4. Circuit board (10) according to any one of the preceding claims, wherein an image sensor (14) is connected to the image sensor attachment area (11) of the circuit board (10) .

5. Circuit board (10) according to claim 4, wherein the image sensor attachment area (11) has the same size as the image sensor (14).

6. Circuit board (10) according to any one of the preceding claims, wherein a lens holder (15) is connected to the lens holder attachment area (12).

7. Circuit board (10) according to claim 6, wherein the lens holder attachment area (12) has the same size as the lens holder (15) connected to the circuit board (10).

8. Circuit board (10) according to any one of the preceding claims, wherein the image sensor attachment area (11) is separate from the lens holder attachment area (12).

9. Circuit board (10) according to any one of the preceding claims, wherein the vias (13) are plated with a conductive material.

10. Circuit board (10) according to any one of the preceding claims, wherein the majority of the vias (13) is unfilled.

11. Circuit board (10) according to any one of the preceding claims, wherein the vias (13) have a diameter between 0.1 mm and 0.7 mm.

12. Circuit board (10) according to any one of the preceding claims, wherein
- the ratio of the area covered by vias (13) in the image sensor attachment area (11) to the image sensor attachment area (11) is smaller than 0.4, and/or wherein
- the ratio of the area covered by vias (13) in the lens holder attachment area (12) to the lens holder attachment area (12) is smaller than 0.4.

13. Circuit board (10) according to any one of the preceding claims, wherein
- the image sensor attachment area (11) is surrounded by an edge strip (16) having the same ratio or similar ratio of area covered by vias (13) in the edge strip (16) to the edge strip (16) as the ratio in the image sensor attachment area, and/or wherein
- the lens holder attachment area (12) is surrounded by an edge strip (16) having the same ratio or similar ratio of area covered by vias (13) in the edge strip (16) to the edge strip (16) as the ratio in the lens holder attachment area (12).

14. Camera module (20) for a motor vehicle comprising a lens objective (17), a lens holder (15) holding said lens objective (17), and a circuit board (10) according to any one of the preceding claims connected to said lens holder (15) in the lens holder attachment area (12) and holding an image sensor (14) in the image sensor attachment area (11) .

15. Camera module (20) according to claim 14, wherein the camera module (20) is a fixed focus camera module (20).
